# EUROPEAN PATENT SPECIFICATION

(11) **EP 3 005 764 B1**
(45) Date of publication and mention of the grant of the patent: **07.08.2019**
(21) Application number: 14734635.7
(22) Date of filing: 28.05.2014
(51) Int. Cl.: H04W 12/06, H04W 4/60, H04L 29/06

(54) **SYSTEMS AND METHODS FOR ENABLING AN APPLICATION MANAGEMENT SERVICE TO REMOTELY ACCESS ENTERPRISE APPLICATION STORE**
SYSTEME UND VERFAHREN ZUM ERMÖGLICHEN DES FERNGESTEUERTEN ZUGRIFFS AUF EINEN UNTERNEHMENSANWENDUNGSSPEICHER DURCH EINEN ANWENDUNGSVERWALTUNGSDIENST
SYSTEME ET PROCEDES POUR PERMETTRE A UN SERVICE DE GESTION D'APPLICATIONS D'ACCEDER A DISTANCE A UN MAGASIN D'APPLICATIONS D'ENTREPRISE

(30) Priority: 05.06.2013 US 201313910680
(43) Date of publication of application: 13.04.2016
(73) Proprietor: Citrix Systems Inc., Fort Lauderdale, FL 33309 (US)
(72) Inventor: GUPTA, Punit, Fort Lauderdale, Florida 33309 (US); BHUSHAN, Bharat, Fort Lauderdale, Florida 33309 (US); KANN, Jong, Fort Lauderdale, Florida 33309 (US); RAFIQ, Pierre, Fort Lauderdale, Florida 33309 (US)
(74) Representative: Boult Wade Tennant LLP
(86) International application number: PCT/US2014/039713
(87) International publication number: WO 2014/197248

(56) References cited:
- EP-A1- 2 334 034
- WO-A1-2013/025196
- US-A1- 2013 091 557
- Robin Hobo: "Configuring Netscaler access gateway VPX and Citrix StoreFront", , 14 April 2013 (2013-04-14), XP002729145, Retrieved from the Internet: URL:http://www.robinhobo.com/configuring-n etscaler-access-gateway-vpx-and-citrix-sto refront/ [retrieved on 2014-08-28]
- Chris Bradford: "NetScaler:Configuring Access Gateway for Storefront 1.1", , 11 May 2012 (2012-05-11), XP002729146, Retrieved from the Internet: URL:http://www.cb-net.co.uk/citrix-article s/2021-netscaler-configuring-access-gatewa y [retrieved on 2014-08-28]
- Ibm Corp.: "Manage and Secure your Mobile Enterprise", IBM documents on line, 7 June 2012 (2012-06-07), pages 1-33, XP055098633, Retrieved from the Internet: URL:https://www-950.ibm.com/events/wwe/grp /grp004.nsf/vLookupPDFs/3_15/$file/3_15.pd f [retrieved on 2014-01-27]
- Citrix: "Citrix XenMobile Technology Overview | White Paper", Citrix White papers on line, 31 July 2012 (2012-07-31), pages 1-14, XP055098728, Retrieved from the Internet: URL:http://www.insight.com/content/dam/ins ight/en_US/pdfs/citrix/xenmobile-tech-over view.pdf [retrieved on 2014-01-27]

## Description

### CROSS-REFERENCE TO RELATED CASES

This application claims priority to U.S. Application Serial No. 13/910,680, filed June 5, 2013, and having the same title.

### FIELD

This application relates generally to computing devices interacting with enterprise managed systems, application programs, and resources.

### BACKGROUND

Many enterprises (e.g., corporations, partnerships, governments, academic institutions, other organizations, etc.) maintain enterprise computer networks that allow enterprise users, such as employees, to access enterprise applications, data, and services (collectively known simply as "resources"), such as hardware and software applications for email, customer relationship management (CRM), enterprise resource planning (ERP), documents, document management services, enterprise application stores, and the like. These computer networks and resources may include various cloud computing components. Cloud computing environments allow for computers to be owned and managed by a cloud operator with resources stored by those computers to be remotely accessed by others, typically customers of the cloud operator.

Enterprises often allow remote access to enterprise resources, such as when enterprise users are not in an enterprise network, using virtualization and other techniques. Also, many enterprises allow users to access enterprise resources via various types of computing devices including not only desktop computers but also mobile devices such as laptops, smartphones, tablet computers, PDAs (personal digital assistant), etc. Virtualized computing resources generally allow for the operating systems, applications, and user settings of multiple users to be included on a single physical machine. Desktop and mobile virtualization technology allows multiple instances of an operating system to be kept separate, so the activities of one user do not affect the experience of other users.

Enterprises typically deploy enterprise management systems to assist in the management and control of remote access to enterprise resources by various types of computing devices. With respect to mobile devices, these systems have traditionally taken the approach of managing entire mobile devices through what are known as mobile device management (MDM) approaches. In such cases, enterprises typically issue mobile devices to employees, which are often intended exclusively for business use, and the enterprise maintains control over the mobile devices and all of their applications and data. A recent trend is to allow employees to use their own mobile device(s) for work purposes (a scenario known as BYOD - bring your own device). It is desirable in this scenario too for the enterprise to maintain control over enterprise resources, which may be accessed by, may be run on, or may be stored on an employee's mobile device.
Robin Hobo ("Configuring NetScaler Access Gateway VPX and Citrix StoreFront"; 14 April 2013; Retrieved from the internet; URL: http://www.robinhobo.com/configuring-netscaler-access-gateway-vpx-and-citrix-storefront/) describes how to configure the Citrix NetScaler Access Gateway VPX with Citrix StoreFront.
Chris Bradford ("NetScaler : Configuring Access Gateway for Storefront 1.1"; 11 May 2012; Retrieved from the internet; URL: http://www.cb-net.co.uk/citrix-articles/2021-netscaler-configuring-access-gateway) describes how to configure Access Gateway for Citrix Storefront 1.1.
WO 2013/025196 describes providing a multimodal device capable of providing at least dual usage.
EP 2334034 describes providing access to an enterprise application from a telecommunications device via a client, through a device server, and an intermediate application gateway.
IBM Corp. ("Manage and Secure your Mobile Enterprise"; 7 June 2012; Retrieved from the internet; URL: https://www-950.ibm.com/events/wwe/grp/grp004.nsf/vLookupPDFs/3_15/$file/3_15.pdf) describes methods for managing and securing mobile enterprises.

### SUMMARY

A method for providing secure remote access to an enterprise application store is provided according to claim 1. A system for providing secure remote access to enterprise applications is provided according to claim 7. A mobile device adapted to remotely access a private enterprise application store in a secure manner is provided according to claim 13.

An enterprise application store and access to it may more fully enfranchise the needs and desires of employees while balancing the security interests of the enterprise and the protection of its enterprise resources. The enterprise is provided with final control over the offered enterprise applications, including the selection, management, distribution, and updating of these applications, while users are provided with the ability to self select and access these applications from various device types. Further, users may be provided with the ability to also access a publicly available application store.

An enterprise management solution is described herein which allows remote access via a gateway by a mobile device to an enterprise application store (app store) and corresponding enterprise applications. The gateway may provide an access token to an authenticated access manager, and this access token may be passed to an application management service (application), and the application management service may use the token to obtain remote access to the enterprise application store. In this manner, enterprise managed mobile applications may be made available to a computing device with a service that is not compatible with session cookies. Embodiments of the invention are directed to a method for allowing mobile devices having an application management service, such as iTunes Music Store (ITMS), which does not accept session cookies, to remotely access an enterprise application store hosted in a private enterprise cloud.

Additionally, a method for providing temporary secure remote access to an enterprise application store for an application management service on a mobile device is described. An authentication request with user compliance credentials and mobile device compliance credentials is received from an access manager on the mobile device by an access gateway, the authentication request is compared with a corporate policy to determine compliance with the corporate policy; and authorization is provided to access the private enterprise application store upon verification of compliance. At the secure private application store, following the authorization, a request from the mobile device to download an application to the mobile device is received; the requested application is delivered to the requesting mobile device; and the mobile device is de-authorized from accessing the secure private application store following a predetermined time period, the delivery of the requested application, or a change in the credentials of the requesting device.

Further, a mobile device is described herein which is able to remotely access a private enterprise application store in a secure manner and further access a publicly available application store. The mobile device includes an application management service operable to access a publicly available application store in a first mode of operation and operable to access a private enterprise application store in a second mode of operation. The mobile device also includes an access manager operable to authenticate to an access gateway, receive a session cookie in response to authentication, request an access token, and pass the session cookie or the access token to the application management service to allow the application management service to operate in the second mode of operation.

Other embodiments are directed to computerized apparatus, systems, and computer program products. Some embodiments involve activity that is performed at a single location, while other embodiments involve activity that is distributed over a computerized environment (e.g., over a network).

### BRIEF DESCRIPTION OF THE DRAWINGS

Fig. 1 is a block diagram of an exemplary enterprise mobility management system; and
Fig. 2 is a block diagram of an exemplary embodiment of a network environment for a client device to access a server via a gateway; and
Fig. 3 is an exemplary sequence diagram for allowing an unauthenticated service access to an enterprise application store using a token.

### DETAILED DESCRIPTION

Systems and methods described herein provide access to an enterprise application store for facilitation of application management and downloading. Embodiments of the invention will now be described. It is understood that these embodiments are provided by way of example to illustrate various features and principles of the invention, and that the invention hereof is broader than the specific exemplary embodiments disclosed. For example, while various exemplary and nonlimiting embodiments are described below with reference to BYOD and mobile devices, the disclosure is not so limited. Rather, exemplary embodiments are broadly described herein as encompassing any and all situations regardless of device type and device ownership.

The concept of bring your own device (BYOD) relates to employees of an enterprise having the flexibility to use a mobile device of their choice to access enterprise resources, while also using the mobile device as a personal device. The enterprises supporting BYOD may benefit from cost savings due to not having to purchase mobile devices for their employees, while simultaneously benefitting from increased employee productivity that may result in the employee having seamless access to enterprise resources which is location independent, i.e. the employee no longer has to be physically in the office to access enterprise resources. The employee may benefit by having the option to use their preferred mobile device, while also having increased freedom of time and location, potentially able to perform many of their job functions at a time and in a place of the employee's choosing.

BYOD, while providing benefits as described for both employers and employees, also introduces a number of challenges, when attempting to both secure enterprise data and resources, while allowing the employee flexibility to continue to use their device as a personal device. The security requirements of the enterprise may be inherently in conflict with the convenience expected by the user. Concepts such as securing applications that access enterprise resources, as well as segregating secure from unsecured data on the phone become increasingly important in a BYOD environment. For added convenience, which may help drive employee adoption, an enterprise may wish to provide a seamless interface, which allows the user to operate the phone and access secure and unsecured resources and services with minimal disruption to the user experience inherent in the mobile device itself. For these and other reasons, a solution such as that outlined in this description may provide the enterprise the capabilities required to secure enterprise resources, while allowing the user to access both enterprise and personal resources seamlessly, conveniently, and efficiently with the device.

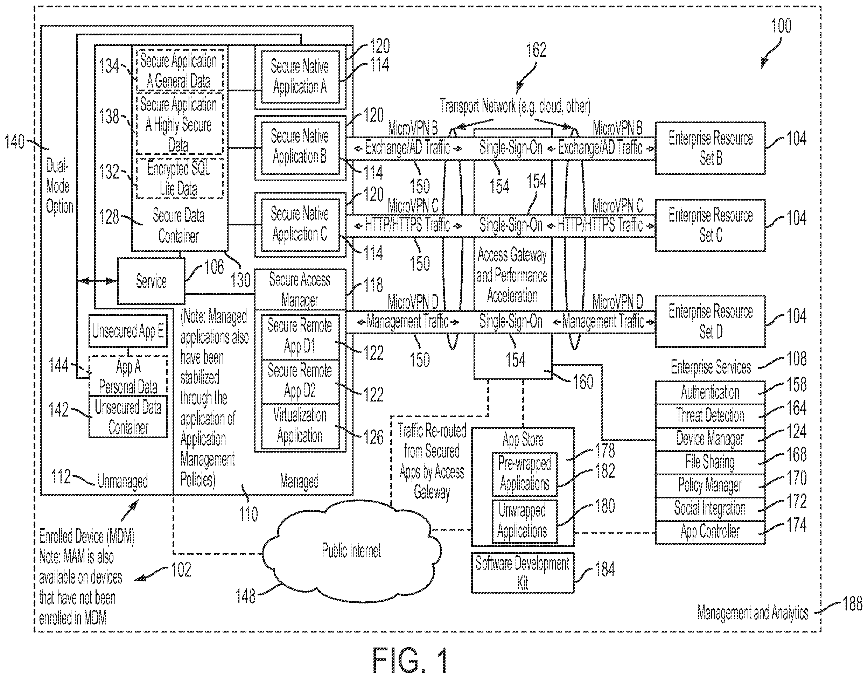

An exemplary system 100 for mobile device management is illustrated in Figure 1. The architecture of system 100 enables a user of a client device such as mobile device 102 to both access enterprise or personal resources from a mobile device 102 and use the mobile device 102 for personal use. Further, the architecture provides security of data and applications for an enterprise. Although only a single mobile device 102 is depicted in Figure 1, the architecture provides support for multiple devices, wherein each device may have the functionality described with respect to mobile device 102.

A user may access enterprise servers and enterprise resources 104 or enterprise services 108 using a mobile device 102 that is purchased by the user or a mobile device 102 that is provided by the enterprise to the user. The user may utilize the mobile device 102 for business use only or for business and personal use. The mobile device may run an iOS operating system, an Android operating system, a Windows operating system, a Blackberry operating system, or the like. The enterprise may choose to implement policies to manage the mobile device 102. The policies may be implanted through a firewall or gateway in such a way that the mobile device may be identified, secured or security verified, and provided selective or full access to the enterprise resources upon authentication. The policies may be mobile device management policies, mobile application management policies, mobile data management policies, or some combination of mobile device, application, and data management policies. A mobile device 102 that is managed through the application of mobile device management policies may be referred to as an enrolled device.

The operating system of the mobile device may be separated into a managed portion 110 and an unmanaged portion 112. The managed portion 110 may have policies applied to it to secure the applications running on and data stored in the managed portion. The applications running on the managed portion may be secure authorized applications. The secure authorized applications may be email applications, web browsing applications, software-as-a-service (SaaS) access applications, Windows Application access applications, and the like. The secure authorized applications may be secure native applications 114, secure remote applications 122 executed by a secure access manager 118, virtualization applications 126 executed by a secure access manager 118, and the like. The secure native applications 114 may be downloaded from an enterprise application store and be wrapped by a secure application wrapper 120. The secure application wrapper 120 may include integrated policies that are executed on the mobile device 102 when the secure native application is executed on the device. The secure application wrapper 120 may include meta-data that points the secure native application 114 running on the mobile device 102 to the resources hosted at the enterprise that the secure native application 114 may require to complete the task requested upon execution of the secure native application 114. The secure remote applications 122 executed by a secure access manager 118 may be executed within the secure access manager application 118. The virtualization applications 126 executed by a secure access manager 118 may utilize resources on the mobile device 102, at the enterprise resources 104, and the like.

The resources used on the mobile device 102 by the virtualization applications 126 executed by a secure access manager application 118 may include user interaction resources, processing resources, and the like. The user interaction resources may be used to collect and transmit keyboard input, mouse input, camera input, tactile input, audio input, visual input, gesture input, and the like. The processing resources may be used to present a user interface, process data received from the enterprise resources 104, and the like. The resources used at the enterprise resources 104 by the virtualization applications 126 executed by a secure access manager 118 may include user interface generation resources, processing resources, and the like. The user interface generation resources may be used to assemble a user interface, modify a user interface, refresh a user interface, and the like. The processing resources may be used to create information, read information, update information, delete information, and the like. For example, the virtualization application may record user interactions associated with a GUI and communicate them to a server application where the server application will use the user interaction data as an input to the application operating on the server. In this arrangement, an enterprise may elect to maintain the application on the server side as well as data, files, etc. associated with the application.

While an enterprise may elect to "mobilize" some applications in accordance with the principles herein by securing them for deployment on the mobile device, this arrangement may also be elected for certain applications. For example, while some applications may be secured for use on the mobile device, others may not be prepared or appropriate for deployment on the mobile device so the enterprise may elect to provide the mobile user access to the unprepared applications through virtualization techniques. As another example, the enterprise may have large complex applications with large and complex data sets (e.g. material resource planning applications) where it would be very difficult, or otherwise undesirable, to customize the application for the mobile device so the enterprise may elect to provide access to the application through virtualization techniques. As yet another example, the enterprise may have an application that maintains highly secured data (e.g. human resources data, customer data, engineering data) that may be deemed by the enterprise as too sensitive for even the secured mobile environment so the enterprise may elect to use virtualization techniques to permit mobile access to such applications and data.

An enterprise may elect to provide both fully secured and fully functional applications on the mobile device as well as a virtualization application to allow access to applications that are deemed more properly operated on the server side. In an embodiment, the virtualization application may store some data, files, etc. on the mobile phone in one of the secure storage locations. An enterprise, for example, may elect to allow certain information to be stored on the phone while not permitting other information to be stored.

In connection with the virtualization application, as described herein, the mobile device may have a virtualization application that is designed to present GUI's and then record user interactions with the GUI. The application may communicate the user interactions to the server side to be used by the server side application as user interactions with the application. In response, the application on the server side may transmit back to the mobile device a new GUI. For example, the new GUI may be a static page, a dynamic page, an animation, or the like.

The applications running on the managed portion may be stabilized applications. The stabilized applications may be managed by a device manager 124. The device manager 124 may monitor the stabilized applications and utilize techniques for detecting and remedying problems that would result in a destabilized application if such techniques were not utilized to detect and remedy the problems.

The secure applications may access data stored in a secure data container 128 in the managed portion 110 of the mobile device. The data secured in the secure data container may be accessed by the secure wrapped applications 114, applications 122 executed by a secure application launcher of secure access manager 118, virtualization applications 126 executed by a secure application launcher, and the like. The data stored in the secure data container 128 may include files, databases, and the like. The data stored in the secure data container 128 may include data restricted to a specific secure application 130, shared among secure applications 132, and the like. Data restricted to a secure application may include secure general data 134 and highly secure data 138. Secure general data may use a strong form of encryption such as AES 128-bit encryption or the like, while highly secure data 138 may use a very strong form of encryption such as AES 254-bit encryption. Data stored in the secure data container 128 may be deleted from the device upon receipt of a command from the device manager 124. The secure applications may have a dual-mode option 140. The dual mode option 140 may present the user with an option to operate the secured application in an unsecured mode. In an unsecured mode, the secure applications may access data stored in an unsecured data container 142 on the unmanaged portion 112 of the mobile device 102. The data stored in an unsecured data container may be personal data 144. The data stored in an unsecured data container 142 may also be accessed by unsecured applications 147 that are running on the unmanaged portion 112 of the mobile device 102. The data stored in an unsecured data container 142 may remain on the mobile device 102 when the data stored in the secure data container 128 is deleted from the mobile device 102. An enterprise may want to delete from the mobile device selected or all data, files, and/or applications owned, licensed or controlled by the enterprise (enterprise data) while leaving or otherwise preserving personal data, files, and/or applications owned, licensed or controlled by the user (personal data). This operation may be referred to as a selective wipe. With the enterprise and personal data arranged in accordance to the inventions described herein, an enterprise may perform a selective wipe.

The mobile device may connect to enterprise resources 104 and enterprise services 108 at an enterprise, to the public Internet 148, and the like. The mobile device may connect to enterprise resources 104 and enterprise services 108 through virtual private network (VPN) connections. The virtual private network connections may be specific to particular applications 150, particular devices, particular secured areas on the mobile device, and the like. For example, each of the wrapped authorized applications in the secured area of the phone may access enterprise resources through an application specific VPN such that access to the VPN would be granted based on attributes associated with the application, possibly in conjunction with user or device attribute information. The virtual private network connections may carry Microsoft Exchange traffic, Microsoft Active Directory traffic, HTTP traffic, HTTPS traffic, application management traffic, and the like. The virtual private network connections may support and enable single-sign-on (SSO) authentication processes 154 via the secure access manager 118. The single-sign-on processes may allow a user to provide a single set of authentication credentials, which are then verified by an authentication service 158. The authentication service 158 may then grant to the user access to multiple enterprise resources 104, without requiring the user to provide authentication credentials to each individual enterprise resource 104.

The virtual private network connections may be established and managed in conjunction with an access gateway 160. In some embodiments, per application VPN functionality is achieved using VPN client in conjunction with secure access manager 118 as described below. The access gateway 160 may include performance enhancement features that manage, accelerate, and improve the delivery of enterprise resources 104 to the mobile device 102. The access gateway may also re-route traffic from the mobile device 102 to the public Internet 148, enabling the mobile device 102 to access publicly available and unsecured applications that run on the public Internet 148. The mobile device may connect to the access gateway via a transport network 162. The transport network 162 may be a wired network, wireless network, cloud network, local area network, metropolitan area network, wide area network, public network, private network, and the like.

The enterprise resources 104 may include email servers, file sharing servers, SaaS applications, Web application servers, Windows application servers, and the like. Email servers may include Exchange servers, Lotus Notes servers, and the like. File sharing servers may include ShareFile servers, and the like. SaaS applications may include Salesforce, and the like. Windows application servers may include any application server that is built to provide applications that are intended to run on a local Windows operating system, and the like. The enterprise resources 104 may be premise-based resources, cloud based resources, and the like. The enterprise resources 104 may be accessed by the mobile device 102 directly or through the access gateway 160. The enterprise resources 104 may be accessed by the mobile device 102 via a transport network 160. The transport network 162 may be a wired network, wireless network, cloud network, local area network, metropolitan area network, wide area network, public network, private network, and the like.

The enterprise services 108 may include authentication services 158, threat detection services 164, device manager services 124, file sharing services 168, policy manager services 170, social integration services 172, application controller services 174, an enterprise social platform, and the like. Authentication services 158 may include user authentication services, device authentication services, application authentication services, data authentication services and the like. Authentication services 158 may use certificates. The certificates may be stored on the mobile device 102, by the enterprise resources 104, and the like. The certificates stored on the mobile device 102 may be stored in an encrypted location on the mobile device, the certificate may be temporarily stored on the mobile device 102 for use at the time of authentication, and the like. Threat detection services 164 may include intrusion detection services, unauthorized access attempt detection services, and the like. Unauthorized access attempt detection services may include unauthorized attempts to access devices, applications, data, and the like.

Device management services 124 may include configuration, provisioning, security, support, monitoring, reporting, and decommissioning services. File sharing services 168 may include file management services, file storage services, file collaboration services, and the like. Policy manager services 170 may include device policy manager services, application policy manager services, data policy manager services, and the like. Social integration services 172 may include contact integration services, collaboration services, integration with social networks such as Podio, GoToMeeting, Facebook, Twitter, and LinkedIn, and the like. Application controller services 174 may include management services, provisioning services, deployment services, assignment services, revocation services, wrapping services, and the like.

The enterprise mobility system 100 may include an enterprise application store 178. The application store 178 may include unwrapped applications 180, pre-wrapped applications 182, and the like. Applications may be populated in the enterprise application store 178 from the application controller 174. The application store 178 may be accessed by the mobile device 102 through the access gateway 160, through the public Internet 148, or the like. The application store may be provided with an intuitive and easy to use User Interface. The application store 178 may provide access to a software development kit 184. The software development kit 184 may provide a user the capability to secure applications selected by the user by wrapping the application as described previously in this description. An application that has been wrapped using the software development kit 184 may then be made available to the mobile device 102 by populating it in the application store 178 using the application controller 174.

The enterprise mobility system 100 may include a management and analytics capability 188. The management and analytics capability 188 may provide information related to how resources are used, how often resources are used, and the like. Resources may include devices, applications, data, and the like. How resources are used may include which devices download which applications, which applications access which data, and the like. How often resources are used may include how often an application has been downloaded, how many times a specific set of data has been accessed by an application, and the like.

The gateway 160 may act as a SSLVPN (secure socket layer virtual private network), and HTTP sessions (sequences of network request-response transactions) may be established between the mobile device 102 and gateway 160, as well as between the gateway 160 and the enterprise network (corporate intranet), which may include the enterprise application store 178, enterprise services 108, and other enterprise resources 104. Users need to authenticate to this gateway before they are allowed to remotely access the enterprise resources.

In a mobile environment, a client agent may be designed and constructed to control and manage the tunneling of data packet traffic between a device and an access gateway, and thus an enterprise server and enterprise resources. In some embodiments, the client agent may be designed and constructed to provide a per application VPN environment for a mobile platform or operating system. This functionality may be achieved using a VPN manager in conjunction with a secure access manager 118 on the mobile device, which together operate as an application manager to determine an originating application of data packets to provide a per application VPN functionality for secure authorized applications on the mobile device, while preventing non-authorized applications from accessing an enterprise server/resource.

As mentioned above, mobile device 102 may remotely access enterprise resources 104, services 108, and enterprise application store 178 via the gateway 160 using the secure access manager 118. Mobile device 102 may communicate with the gateway 160 over a communications network that may comprise a wireless carrier network, the Internet, a wide area network, a WiFi network, other network, or combinations of such networks. In some embodiments, mobile device 102 comprises an Apple mobile device such as an iPhone, iPod touch, or iPad, which run iOS (iPhone operating system), or a device that runs Android, Windows Phone, or any other operating systems. Mobile device 102 may also include one or more services 106, such as an application management service 106 configured to facilitate downloading, installation, or updating of applications on the mobile device. Such a service may be configured to interact with an enterprise application store via access gateway 160 in one mode of operation and also with a publicly available non-enterprise application store via the public internet 148 in another mode of operation. For example, in one embodiment in which the mobile device is running iOS, the service 106 may be an application management service such as iTunes Music Store (ITMS), which may access the enterprise application store 178 and may also access the Apple Store.

The application controller 174 and enterprise application store 178 facilitate the control and secure delivery of enterprise and web Software-as-a-Service (SaaS) applications, native applications, and integrated enterprise based data to the mobile device 102. The enterprise application store may provide a single place to manage enterprise application delivery, as well as a single point of access for authenticated enterprise users.

System 100 may include a firewall between the device 102 and the access gateway 160, and a firewall between the access gateway 160 and enterprise resources, and these firewalls may comprise a device or set of devices designed to permit or deny network transmissions based upon certain criteria. The firewalls may comprise software stored on non-transitory computer-readable storage, hardware, firmware, or a combination thereof. The firewalls may be configured to perform basic routing functions, and cooperate with other components of system 100 to filter mobile devices' access requests based on a set of gateway rules, in order to protect the enterprise network from unauthorized access while allowing legitimate communications to pass. Such access rules may be used to regulate access based on, for example, mobile device properties, user properties, the specific enterprise resources for which access is requested, or any combination thereof.

The physical or logical subnetwork between the firewalls may be referred to as the "demilitarized zone" (DMZ), or alternatively as a "perimeter network." Typically, the DMZ contains and exposes the enterprise's external services to a larger untrusted network, usually the Internet. Ordinarily, the purpose of the DMZ is to add an additional layer of security to the enterprise's local area network (LAN); an external attacker only has access to equipment in the DMZ, rather than any other part of the enterprise network.

Mobile enterprise applications can be made available to users via the enterprise application store 178. Enterprise users of mobile device 102 may log on to the gateway 160 and enterprise network by submitting authentication requests to the gateway and receiving authentication responses from the gateway. The gateway 160 then provides access to the enterprise network. In some cases, enterprise users may view mobile applications in the application store 178 and download them to their mobile devices. When an enterprise user downloads an application, the user also receives a corresponding application policy, and the mobile application may then be constrained to operate on the mobile device 102 in accordance with the application policy.

Generally, the mobile applications supported and hosted by the enterprise application store are specially designed or adapted for use with the enterprise, i.e., they are not applications that general users may download for their own personal activities (e.g., news apps, sports apps, Facebook app, etc.). In some cases, mobile applications are designed specially for the enterprise network. In other examples, the applications are widely used applications that are adapted specifically for use with the enterprise network. For example, an application may be provided with additional code that enables the application to conform with the framework of the enterprise network. Such code may be compiled into the application using an SDK (software development kit). Alternatively, such code may be applied as a wrapper around the general-use application, to adapt it specifically for use with the enterprise network. In general, the additional code may serve to divert API calls from the mobile application through the corresponding application policy, such that the policy may control the behavior of the mobile application on the mobile device.

As noted above, in some cases, enterprise mobile applications are hosted in a private enterprise cloud. Users may download and install these applications in their mobile devices and some of these applications may work remotely (i.e. when the user is not in the corporate network). Some of the mobile enterprise apps may be hosted on the application controller 174, and remote access for the installed applications may be supported by access gateway 160.

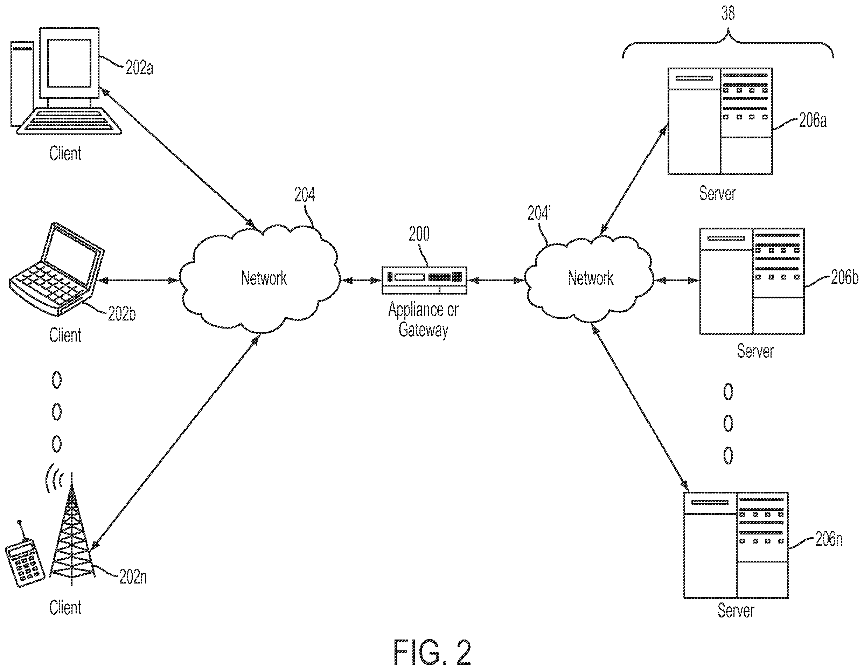

Other forms of enterprise managed systems exist to provide access to enterprise resources to enterprise system users in a secure yet convenient manner for various other computing device types including desktop computers. For example, with respect to FIG. 2, an embodiment of an enterprise managed network environment is depicted. In brief overview, the network environment comprises one or more clients 202a-202n (also generally referred to as computing devices, client devices, local machine(s) 202, or client(s) 202) in communication with one or more servers 206a-206n (also generally referred to as server(s) 206, or remote machine(s) 206) via one or more networks 204, 204' (generally referred to as network 204). In some embodiments, a client 202 communicates with a server 206 via an appliance or gateway 200.

Although FIG. 2 shows a network 204 and a network 204' between the clients 202 and the servers 206, the clients 202 and the servers 206 may be on the same network 204. The networks 204 and 204' can be the same type of network or different types of networks. The network 204 and/or the network 204' can be a local-area network (LAN), such as a company Intranet, a metropolitan area network (MAN), or a wide area network (WAN), such as the Internet or the World Wide Web. In one embodiment, network 204' may be a private network and network 204 may be a public network. In some embodiments, network 204 may be a private network and network 204' a public network. In another embodiment, networks 204 and 204' may both be private networks. In some embodiments, clients 202 may be located at a branch office of a corporate enterprise communicating via a WAN connection over the network 204 to the servers 206 located at a corporate data center.

The network 204 and/or 204' be any type and/or form of network and may include any of the following: a point to point network, a broadcast network, a wide area network, a local area network, a telecommunications network, a data communication network, a computer network, an ATM (Asynchronous Transfer Mode) network, a SONET (Synchronous Optical Network) network, a SDH (Synchronous Digital Hierarchy) network, a wireless network and a wireline network. In some embodiments, the network 204 may comprise a wireless link, such as an infrared channel or satellite band. The topology of the network 204 and/or 204' may be a bus, star, or ring network topology. The network 204 and/or 204' and network topology may be of any such network or network topology as known to those ordinarily skilled in the art capable of supporting the operations described herein.

As shown in FIG. 2, the appliance 200, which also may be referred to as an interface unit 200 or gateway 200, is shown between the networks 204 and 204'. In some embodiments, the appliance 200 may be located on network 204. For example, a branch office of a corporate enterprise may deploy an appliance 200 at the branch office. In other embodiments, the appliance 200 may be located on network 204'. For example, an appliance 200 may be located at a corporate data center. In yet another embodiment, a plurality of appliances 200 may be deployed on network 204. In some embodiments, a plurality of appliances 200 may be deployed on network 204'. In one embodiment, a first appliance 200 communicates with a second appliance 200'. In other embodiments, the appliance 200 could be a part of any client 202 or server 206 on the same or different network 204,204' as the client 202. One or more appliances 200 may be located at any point in the network or network communications path between a client 202 and a server 206.

In some embodiments, the appliance 200 comprises any of the network devices manufactured by Citrix Systems, Inc. of Ft. Lauderdale Florida, referred to as Citrix NetScaler devices. In other embodiments, the appliance 200 includes any of the product embodiments referred to as WebAccelerator and BigIP manufactured by F5 Networks, Inc. of Seattle, Washington. In another embodiment, the appliance 205 includes any of the DX acceleration device platforms and/or the SSL VPN series of devices, such as SA 700, SA 2000, SA 4000, and SA 6000 devices manufactured by Juniper Networks, Inc. of Sunnyvale, California. In yet another embodiment, the appliance 200 includes any application acceleration and/or security related appliances and/or software manufactured by Cisco Systems, Inc. of San Jose, California, such as the Cisco ACE Application Control Engine Module service software and network modules, and Cisco AVS Series Application Velocity System.

In one embodiment, the system may include multiple, logically-grouped servers 206. In these embodiments, the logical group of servers may be referred to as a server farm 38. In some of these embodiments, the servers 206 may be geographically dispersed. In some cases, a farm 38 may be administered as a single entity. In other embodiments, the server farm 38 comprises a plurality of server farms 38. In one embodiment, the server farm executes one or more applications on behalf of one or more clients 202.

The servers 206 within each farm 38 can be heterogeneous. One or more of the servers 206 can operate according to one type of operating system platform (e.g., WINDOWS NT, manufactured by Microsoft Corp. of Redmond, Washington), while one or more of the other servers 206 can operate on according to another type of operating system platform (e.g., Unix or Linux). The servers 206 of each farm 38 do not need to be physically proximate to another server 206 in the same farm 38. Thus, the group of servers 206 logically grouped as a farm 38 may be interconnected using a wide-area network (WAN) connection or medium-area network (MAN) connection. For example, a farm 38 may include servers 206 physically located in different continents or different regions of a continent, country, state, city, campus, or room. Data transmission speeds between servers 206 in the farm 38 can be increased if the servers 206 are connected using a local-area network (LAN) connection or some form of direct connection.

Servers 206 may be referred to as a file server, application server, web server, proxy server, or gateway server. In some embodiments, a server 206 may have the capacity to function as either an application server or as a master application server. In one embodiment, a server 206 may include an Active Directory. The clients 202 may also be referred to as client nodes or endpoints. In some embodiments, a client 202 has the capacity to function as both a client node seeking access to applications on a server and as an application server providing access to hosted applications for other clients 202a-202n.

In some embodiments, a client 202 communicates with a server 206. In one embodiment, the client 202 communicates directly with one of the servers 206 in a farm 38. In another embodiment, the client 202 executes a program neighborhood application to communicate with a server 206 in a farm 38. In still another embodiment, the server 206 provides the functionality of a master node. In some embodiments, the client 202 communicates with the server 206 in the farm 38 through a network 204. Over the network 204, the client 202 can, for example, request execution of various applications hosted by the servers 206a-206n in the farm 38 and receive output of the results of the application execution for display. In some embodiments, only the master node provides the functionality required to identify and provide address information associated with a server 206' hosting a requested application.

In one embodiment, the server 206 provides functionality of a web server. In another embodiment, the server 206a receives requests from the client 202, forwards the requests to a second server 206b and responds to the request by the client 202 with a response to the request from the server 206b. In still another embodiment, the server 206 acquires an enumeration of applications available to the client 202 and address information associated with a server 206 hosting an application identified by the enumeration of applications. In yet another embodiment, the server 206 presents the response to the request to the client 202 using a web interface. In one embodiment, the client 202 communicates directly with the server 206 to access the identified application. In another embodiment, the client 202 receives application output data, such as display data, generated by an execution of the identified application on the server 206.

As mentioned above, enterprise users can access the enterprise resources remotely through a SSLVPN gateway, such as using a secure or a nonsecure web browser on the computing device, or using another application that can be secure or nonsecure. In some cases, a user first enters user credentials, which are verified by the gateway. Once authenticated, the gateway can redirect the user to a common enterprise landing page that has web links to various enterprise resources, such as the enterprise application store, and such as those hosted in a private enterprise cloud.

As noted above, in some cases, enterprise mobile applications are hosted in a private enterprise cloud. Users may download and install these apps in their mobile devices and some of these apps may work remotely (i.e. when the user is not in the corporate network). Some of the mobile enterprise apps may be hosted on the application controller 174, and remote access for the installed applications may be supported by access gateway 160.

Various challenges exist in supporting the remote access of enterprise mobile applications installed on some devices. For example, some services, such as ITMS services on iOS devices, are not able to carry HTTP session cookies, and further do not honor HTTP 302 redirect commands.

In order to be able to remotely access the enterprise intranet resources, such as the enterprise application store 178, through the gateway 160 (which in some embodiments acts as a SSL VPN gateway), typically an HTTP request from secure access manager 118 is used which carries a session cookie issued by the gateway 160. This session cookie is set by the gateway 160 when a user initially authenticates to it using the access manager 118 installed in the mobile device 102. Because in some cases service 106 is an entity that does not authenticate directly to the gateway, and a request by service 106 cannot carry the HTTP session cookie, the gateway 160 may instead provide tokens as necessary to allow remote access to the enterprise network, and such resources and services as the enterprise application store 178, from the service 106.

In particular, gateway 160 includes an HTTP API (application programming interface), which secure access manager 118 may call to obtain an access token for accessing a particular intranet resource/service via the service 106. The access token may be a one time access token that is limited in duration, such as by a specific time or once a specific action is completed. The gateway 160 honors this call only if it comes with a session cookie, which as mentioned the access manager may obtain upon an initial authentication with the gateway for a session.

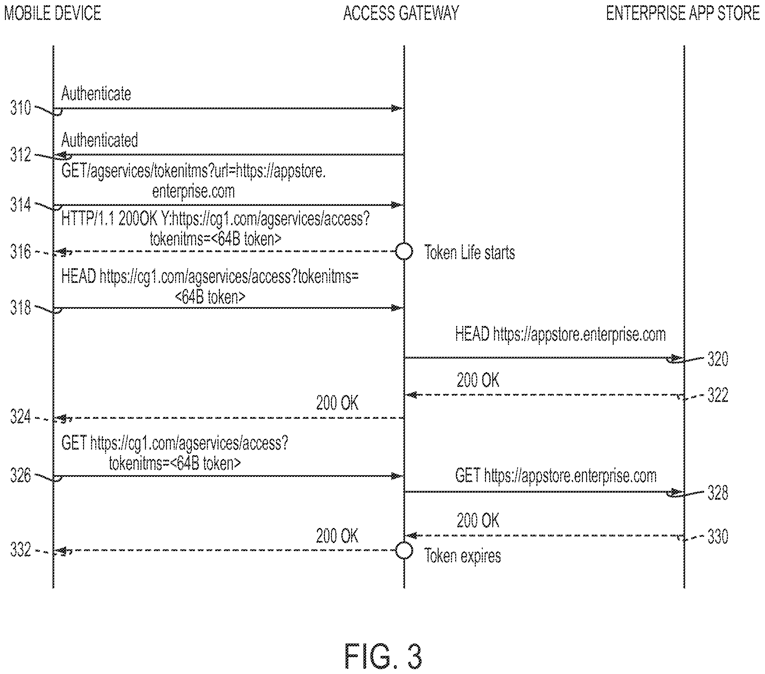

This procedure is illustrated with an example in Fig. 3. Specifically, at 310, secure access manager 118 of mobile device 102 sends an authenticate request to access gateway 160. The gateway 160 checks and verifies user credentials, which typically may be username and password (though various other authentication procedures may also be utilized, such as a One Time Password [OTP], or PIN number). Other credentials can also be provided, includes mobile device compliance credentials. At 312, after verification of compliance, the secure access manager 118 is authenticated and provided with a session cookie.

At the device 102, if a service 106 needs to be invoked to access an enterprise intranet resource, and the service 106 does not have the ability to carry a session cookie, the access manager 118 calls the above API with a request to obtain a one time token from the gateway 160. The HTTP request/response from the application launcher 118 may look like:

```
        POST /AGServices/tokenitms?url=<base64 encoded url of resource/service>
```

Thus in the example shown in Fig. 3, at 314, access manager 118 sends a request for a token to the gateway 160, and in particular for remote access to a specified URL, such as the enterprise application store in the enterprise network. The session cookie is included with this access token request. The gateway 160 evaluates the request to ensure that it is from an authenticated application or client and includes the session cookie. At 316, the gateway 160 sends back a token if it is determined the request is from an authenticated mobile device and includes the previously provided session cookie. This token may be valid for a predetermined duration. In particular, gateway 160 may respond with the token in an HTTP response body. The gateway 160 also stores the URL associated with the issued token. A response from the gateway may look like this:

```
        HTTP/1.1 200 OK
        BODY:
        Y:https://ag-fqdn/AGServices/access?token=<One Time Token>
```

The access manager 118 then invokes the service 106 on device 102 with the URL received and provides the corresponding token to the service. At 318, a request from service 106 on the device 102 then includes the token and may take the form of the following:

```
        HEAD /AGServices/access?tokenitms=<token issued by AG>
```

Note that the request does not contain the session cookie from the gateway 160 provided to application launcher 118, and also that the request is actually in two parts- a HEAD request at 318, followed by a GET request at 326.

On receiving the HEAD request with token from service 106, gateway 160 validates the token, fetches the URL of the backend enterprise resource associated with it, and sends the HEAD request to the corresponding URL at 320. In this example, at 322, a response is sent from the enterprise application store to gateway 160, and then at 324 forwarded by the gateway 160 to the service 106.

At 326, a GET request is sent by the service 106 to obtain the desired content of a requested resource. The GET request also includes the token, and may look like the following:

```
        GET /AGServices/access?tokenitms=<token issued by AG>
```

Next, on receiving the GET request from service 106, the gateway 160 validates the token, fetches the URL of the backend resource associated with it, and at 328 passes the GET request to the backend resource. At 330, a response is sent by the enterprise and received by the gateway. At this time, the token is expired by removing its entry from the database of the gateway 160. In other embodiments, the token (or the session cookie) could be expired by at the end of a predetermined time period, once the requested resource is downloaded, or a change occurs in the credentials of the requesting device.

At 332, the requested resource content is provided to the service 106. In some cases, an application can be downloaded to the mobile device, such as to a secure container on the mobile device.

Note that the gateway 160 could have sent a HTTP 302 redirect request to the service 106 with the Location-Header containing the original URL of the backend resource in the rewritten form so that the next request lands directly at gateway 160. However, since some services, such as an ITMS service, do not understand HTTP 302 redirect requests, the gateway acts as a middleman to contact the backend resource (enterprise application store) itself, sends the HTTP request to the backend, receives the response, and forwards the response to the service 106.

In this manner, a service 106, such as an application management service, is able to access an enterprise application store remotely through a secure gateway without requiring it to send a session cookie along with an access request. Further, an HTTP 302 redirect request is not required because the gateway may act as a middleman. In this manner, various mobile devices with different operating systems are allowed to access the enterprise application store, so that various applications may be downloaded or updated or otherwise supported. The supported mobile devices include Apple mobile devices with their corresponding iOS applications.

In other cases, the service 106 is able to access an enterprise application store using a session cookie provided by the access manager. Further, the service 106 may be able to process HTTP 302 redirect requests.

Various modifications to the implementations described in this disclosure may be readily apparent to those skilled in the art, and the generic principles defined herein may be applied to other implementations without departing from the scope of this disclosure. Thus, nothing in this specification is intended to imply that any feature, characteristic, or attribute of the disclosed systems and processes is essential.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

## Claims

1. A method for providing secure remote access to an enterprise application store (178) from a mobile device (102), the method comprising:
receiving, by an access gateway (160), an access token request from an authenticated access manager (118) on the mobile device (102),
providing, by the access gateway (160), an access token to the authenticated access manager in response to the access token request if the access token request includes a valid session cookie;
receiving, by the access gateway (160), an access request from an application management service (106) on the mobile device (102), and
allowing, by the access gateway (160), access to the enterprise application store (178) by the mobile device (102) if the access request includes the access token.

2. The method of claim 1, wherein the application management service (106) is operable to directly interact with a publicly available application store (178).

3. The method of claim 1, wherein the access request includes a desired URL of an enterprise application store (178).

4. The method of claim 1, wherein the access request includes one of a HEAD command and a GET command.

5. The method of claim 1, further comprising permitting an application to be delivered to the mobile device (102) via the enterprise application store (178).

6. The method of claim 1, further comprising permitting an application to be downloaded to the mobile device (102) from the enterprise application store (178).

7. A system for providing secure remote access to enterprise applications, the system comprising:
an access gateway (160); and
an enterprise application store (178) for delivering one or more enterprise applications to a mobile device (102) via the access gateway (160);
wherein the access gateway (160) is configured to receive an access token request from an authenticated access manager (118) of the mobile device (102), provide an access token in response to the access token request if the access token request includes a valid session cookie, receive an application access request from an application management service (106) on the mobile device (102), and allow access to the enterprise application store (178). by the application management service (106) if the access request includes the access token.

8. The system of claim 7, wherein the application management service (106) is operable to directly interact with a publicly available application store.

9. The system of claim 7, wherein the access request includes a desired URL of an enterprise application store (178).

10. The system of claim 7, wherein the access request includes one of a HEAD command and a GET command.

11. The system of claim 7, wherein the access gateway (160) is configured to permit an application to be delivered to the mobile device (102) via the enterprise application store (178).

12. The system of claim 7, wherein the access gateway (160) is configured to permit an application to be downloaded to the mobile device (102) from the enterprise application store (178).

13. A mobile device (102) adapted to remotely access a private enterprise application store (178) in a secure manner, the mobile device (102) comprising:
an application management service (106) operable to access a publicly available application store in a first mode of operation and to access a private enterprise application store (178) in a second mode of operation; and
an access manager (118) operable to authenticate to an access gateway (160), receive a session cookie in response to authentication, request an access token from the access gateway (160) by using the received session cookie, and pass the access token received from the access gateway (160) to the application management service (106) to allow the application management service (106) to operate in the second mode of operation.

14. The mobile device (102) of claim 13, wherein the application management service (106) is operable to facilitate (106) downloading of applications from one of the publicly available application store and the private enterprise application store (178).

15. The mobile device (102) of claim 13, configured to permit an application to be downloaded to the mobile device (102) from the enterprise application store (178).

## Patentansprüche

1. Verfahren zum Bereitstellen eines sicheren Fernzugriffs auf einen Unternehmensanwendungsspeicher (178) von einem mobilen Gerät (102) aus, wobei das Verfahren umfasst:
Empfangen einer Zugriffstoken-Anforderung von einem authentifizierten Zugriffsmanager (118) auf dem mobilen Gerät (102) durch ein Zugriffsgateway (160),
Bereitstellen eines Zugriffstokens für den authentifizierten Zugriffsmanager durch das Zugriffsgateway (160) als Reaktion auf die Zugriffstoken-Anforderung, wenn die Zugriffstoken-Anforderung ein gültiges Sitzungscookie enthält;
Empfangen, durch das Zugriffsgateway (160), einer Zugriffsanforderung von einem Anwendungsverwaltungsdienst (106) auf dem mobilen Gerät (102) und
Ermöglichen des Zugriffs auf den Unternehmensanwendungsspeicher (178) durch das mobile Gerät (102) über das Zugriffsgateway (160), wenn die Zugriffsanforderung das Zugriffstoken enthält.

2. Verfahren nach Anspruch 1, bei dem der Anwendungsverwaltungsdienst (106) betreibbar ist, um direkt mit einem öffentlich zugänglichen Anwendungsspeicher (178) zu interagieren.

3. Verfahren nach Anspruch 1, bei dem die Zugriffsanforderung eine gewünschte URL eines Unternehmensanwendungsspeichers (178) enthält.

4. Verfahren nach Anspruch 1, bei dem die Zugriffsanforderung einen HEAD-Befehl und/oder einen GET-Befehl aufweist.

5. Verfahren nach Anspruch 1, ferner umfassend das Ermöglichen der Bereitstellung einer Anwendung an die mobile Vorrichtung (102) über den Unternehmensanwendungsspeicher (178).

6. Verfahren nach Anspruch 1, ferner umfassend das Ermöglichen des Herunterladens einer Anwendung auf die mobile Vorrichtung (102) aus dem Unternehmensanwendungsspeicher (178).

7. System zum Bereitstellen eines sicheren Fernzugriffs auf Unternehmensanwendungen, wobei das System umfasst:
ein Zugriffsgateway (160); und
einen Unternehmensanwendungsspeicher (178) zum Bereitstellen einer oder mehrerer Unternehmensanwendungen an ein mobiles Gerät (102) über das Zugriffsgateway (160);
wobei das Zugriffsgateway (160) konfiguriert ist, um eine Zugriffstoken-Anforderung von einem authentifizierten Zugriffsmanager (118) des mobilen Geräts (102) zu empfangen, ein Zugriffstoken als Reaktion auf die Zugriffstoken-Anforderung bereitzustellen, wenn die Zugriffstoken-Anforderung ein gültiges Sitzungs-Cookie enthält, eine Anwendungszugriffsanforderung von einem Anwendungsmanagementdienst (106) auf dem mobilen Gerät (102) zu empfangen und den Zugriff auf den Unternehmensanwendungsspeicher (178) durch den Anwendungsmanagementdienst (106) zu ermöglichen, wenn die Zugriffsanforderung das Zugriffstoken enthält.

8. System nach Anspruch 7, bei dem der Anwendungsverwaltungsdienst (106) betreibbar ist, um direkt mit einem öffentlich zugänglichen Anwendungsspeicher zu interagieren.

9. System nach Anspruch 7, bei dem die Zugriffsanforderung eine gewünschte URL eines Unternehmensanwendungsspeichers (178) enthält.

10. System nach Anspruch 7, bei dem die Zugriffsanforderung einen HEAD-Befehl und/oder einen GET-Befehl aufweist.

11. System nach Anspruch 7, bei dem das Zugriffsgateway (160) konfiguriert ist, um die Bereitstellung einer Anwendung an das mobile Gerät (102) über den Unternehmensanwendungsspeicher (178) zu ermöglichen.

12. System nach Anspruch 7, bei dem das Zugriffsgateway (160) konfiguriert ist, um das Herunterladen einer Anwendung auf das mobile Gerät (102) aus dem Unternehmensanwendungsspeicher (178) zu ermöglichen.

13. Mobiles Gerät (102), das angepasst ist, um auf sichere Weise aus der Ferne auf einen privaten Unternehmensanwendungsspeicher (178) zuzugreifen, wobei das mobile Gerät (102) umfasst:
einen Anwendungsverwaltungsdienst (106), der betreibbar ist, um in einer ersten Betriebsart auf einen öffentlich zugänglichen Anwendungsspeicher zuzugreifen und in einer zweiten Betriebsart auf einen privaten Unternehmensanwendungsspeicher (178) zuzugreifen; und
einen Zugriffsmanager (118), der betreibbar ist, um sich an einem Zugriffsgateway (160) zu authentifizieren, ein Sitzungs-Cookie als Reaktion auf die Authentifizierung zu empfangen, ein Zugriffstoken von dem Zugriffsgateway (160) unter Verwendung des empfangenen Sitzungs-Cookies anzufordern und das vom Zugriffsgateway (160) empfangene Zugriffstoken an den Anwendungsmanagementdienst (106) weiterzugeben, um zu ermöglichen, dass der Anwendungsmanagementdienst (106) in der zweiten Betriebsart arbeitet.

14. Mobiles Gerät (102) nach Anspruch 13, bei dem der Anwendungsverwaltungsdienst (106) betreibbar ist, um das Herunterladen von Anwendungen aus dem öffentlich zugänglichen Anwendungsspeicher oder dem privaten Unternehmensanwendungsspeicher (178) zu erleichtern.

15. Mobiles Gerät (102) nach Anspruch 13, das konfiguriert ist, um das Herunterladen einer Anwendung auf das mobile Gerät (102) aus dem Unternehmensanwendungsspeicher (178) zu ermöglichen.

## Revendications

1. Procédé pour fournir un accès à distance sécurisé à un magasin d'applications d'entreprise (178) à partir d'un dispositif mobile (102), le procédé comprenant :
recevoir, via une passerelle d'accès (160), une demande de jeton d'accès à partir d'un gestionnaire d'accès authentifié (118) sur le dispositif mobile (102),
fournir, via la passerelle d'accès (160), un jeton d'accès au gestionnaire d'accès authentifié en réponse à la demande de jeton d'accès si la demande de jeton d'accès comprend un cookie de session valide ;
recevoir, via la passerelle d'accès (160), une demande d'accès à partir d'un service de gestion d'applications (106) sur le dispositif mobile (102), et
autoriser, via la passerelle d'accès (160), un accès au magasin d'applications d'entreprise (178) par le dispositif mobile (102) si la demande d'accès comprend le jeton d'accès.

2. Procédé selon la revendication 1, dans lequel le service de gestion d'applications (106) peut fonctionner pour interagir directement avec un magasin d'applications disponible au public (178).

3. Procédé selon la revendication 1, dans lequel la demande d'accès comprend une URL souhaitée d'un magasin d'applications d'entreprise (178).

4. Procédé selon la revendication 1, dans lequel la demande d'accès comprend l'une d'une instruction HEAD et d'une instruction GET.

5. Procédé selon la revendication 1, comprenant en outre la permission pour une application d'être délivrée au dispositif mobile (102) via le magasin d'applications d'entreprise (178).

6. Procédé selon la revendication 1, comprenant en outre la permission pour une application d'être téléchargée sur le dispositif mobile (102) à partir du magasin d'applications d'entreprise (178).

7. Système pour fournir un accès à distance sécurisé à des applications d'entreprise, le système comprenant :
une passerelle d'accès (160) ; et
un magasin d'applications d'entreprise (178) pour délivrer une ou plusieurs applications d'entreprise à un dispositif mobile (102) via la passerelle d'accès (160) ;
dans lequel la passerelle d'accès (160) est configurée pour recevoir une demande de jeton d'accès à partir d'un gestionnaire d'accès authentifié (118) du dispositif mobile (102), fournir un jeton d'accès en réponse à la demande de jeton d'accès si la demande de jeton d'accès comprend un cookie de session valide, recevoir une demande d'accès à partir d'un service de gestion d'applications (106) sur le dispositif mobile (102), et autoriser un accès au magasin d'applications d'entreprise (178) par le service de gestion d'applications (106) si la demande d'accès inclut le jeton d'accès.

8. Système selon la revendication 7, dans lequel le service de gestion d'applications (106) est opérationnel pour interagir directement avec un magasin d'applications disponible au public.

9. Système selon la revendication 7, dans lequel la demande d'accès comprend une URL souhaitée d'un magasin d'applications d'entreprise (178).

10. Système selon la revendication 7, dans lequel la demande d'accès comprend l'une d'une instruction HEAD et d'une instruction GET.

11. Système selon la revendication 7, dans lequel la passerelle d'accès (160) est configurée pour permettre à une application d'être délivrée au dispositif mobile (102) via le magasin d'applications d'entreprise (178).

12. Système selon la revendication 7, dans lequel la passerelle d'accès (160) est configurée pour permettre à une application d'être téléchargée sur le dispositif mobile (102) à partir du magasin d'applications d'entreprise (178) .

13. Dispositif mobile (102) adapté pour accéder à distance à un magasin d'applications d'entreprise privé (178) de manière sécurisée, le dispositif mobile (102) comprenant :
un service de gestion d'applications (106) opérationnel pour accéder à un magasin d'applications disponible au public dans un premier mode de fonctionnement et pour accéder à un magasin d'applications d'entreprise privé (178) dans un second mode de fonctionnement ; et
un gestionnaire d'accès (118) utilisable pour s'authentifier auprès d'une passerelle d'accès (160), recevoir un cookie de session en réponse à l'authentification, demander un jeton d'accès à partir de la passerelle d'accès (160) en utilisant le cookie de session reçu, et transmettre le jeton d'accès reçu à partir de la passerelle d'accès (160) au service de gestion d'applications (106) pour autoriser le service de gestion d'applications (106) à fonctionner dans le second mode de fonctionnement.

14. Dispositif mobile (102) selon la revendication 13, dans lequel le service de gestion d'applications (106) est opérationnel pour faciliter le téléchargement d'applications à partir d'un du magasin d'applications disponible au public et du magasin d'applications d'entreprise privé (178).

15. Dispositif mobile (102) selon la revendication 13, configuré pour permettre à une application d'être téléchargé sur le dispositif mobile (102) à partir du magasin d'applications d'entreprise (178).
